# EUROPEAN PATENT APPLICATION

(11) **EP 1 008 991 A1**
(43) Date of publication of application: **14.06.2000**
(21) Application number: 99111492.7
(22) Date of filing: 14.06.1999
(51) Int. Cl.: G11B 33/04, G11B 23/023, A47B 81/06, A47F 7/14

(54) **One-piece container for retaining various flat rigid objects in an arrangement in three perpendicular planes**

(30) Priority: 11.12.1998 IT BG980070
(71) Applicant: Mapes S.r.L, 24040 Ciserano (Bergamo) (IT)
(72) Inventor: Pestuggia, Giorgio, 24100 Bergamo (IT)
(74) Representative: Luksch, Giorgio, Dr.-Ing.

(57) **Abstract**

This container for retaining various flat rigid objects (10) has the characteristic of a one-piece structure shaped to offer a plurality of stable storage seats for said flat objects, and which can be used with the container arranged in any one of the three possible container resting positions in three perpendicular planes, said possibility deriving from a shape similar to a V, with arched sides defining said resting facility.

## Description

This invention relates to a one-piece container for retaining various usual parallelepiped cases in an arrangement in three perpendicular planes. As is well known, a multiplicity of flat rigid objects exist which need to be stored in an ordered manner, to enable them to be individually identified and made easily accessible for repositioning and withdrawal. An example of such rigid objects are the flat parallelepiped cases for housing so-called CDs (compact disks). These objects are generally stored in a stacked superposed arrangement in tower-like containers provided with guide grooves into which the parallel sides of said flat parallelepiped cases are inserted. These usual tower-like containers are relatively costly because they comprise large walls, required to give solidity to the container structure, which is in the typical form of a prismatic tower with a quadrangular base.

Other usual containers comprise substantially a rectangular base from which transverse plates project upwards to act as separators for the stored flat cases. This type of container has the drawback of providing storage which to achieve satisfactory stability requires the container to be positioned horizontally, meaning that such a container is unsuitable for spaces which are available only in a vertical direction. Usual containers are generally in a form to adapt aesthetically to specific furnishing arrangements, for example classical, luxury, office, modern living room, etc., with the result that such containers poorly integrate aesthetically in terns of their shape and colour with most of the living environments for which they are intended. An object of the present invention is to define a container for retaining various flat rigid objects which has a geometrical form and colour such as to make it suitable for any furnishing style. A further object is to provide a container of the aforesaid type which can be constructed by plastic injection-moulding. A further object is to define a container of the aforesaid type which can be produced at extremely low cost. A further object is to define a container of the aforesaid type which can consist of a single piece. A further object is to define a container of the aforesaid type which can be rested stably on a surface in any one of three perpendicular planes, at the choice of the user. These and further objects will be seen to have been attained on reading the ensuing detailed description of a container for retaining various flat rigid objects, having the characteristic of a one-piece structure shaped to offer a plurality of seats for stably storing the said flat objects and which can be used with the container arranged in any one of the three possible container resting positions in three perpendicular planes.

The invention is illustrated by way of non-limiting example on the accompanying drawings, on which:
Figure 1 shows a container resting horizontally on a surface with its seats open frontwards and arranged for stable vertical storage of flat objects;
Figure 2 shows the rear side of a container, identical to that shown in Figure 1, resting vertically on a surface and with its seats arranged for stacked stable horizontal storage of flat objects;
Figure 3 is a side view of the container of Figures 1 and 2 resting horizontally on a surface with its seats open upwards for downward access and arranged for stable vertical storage of flat objects.

With reference to said figures, two ends 1 and 2 comprise two arched portions 1A, 1B and 2A, 2B lying in two parallel planes, one of which is represented by a horizontal surface 3 on which the container rests.

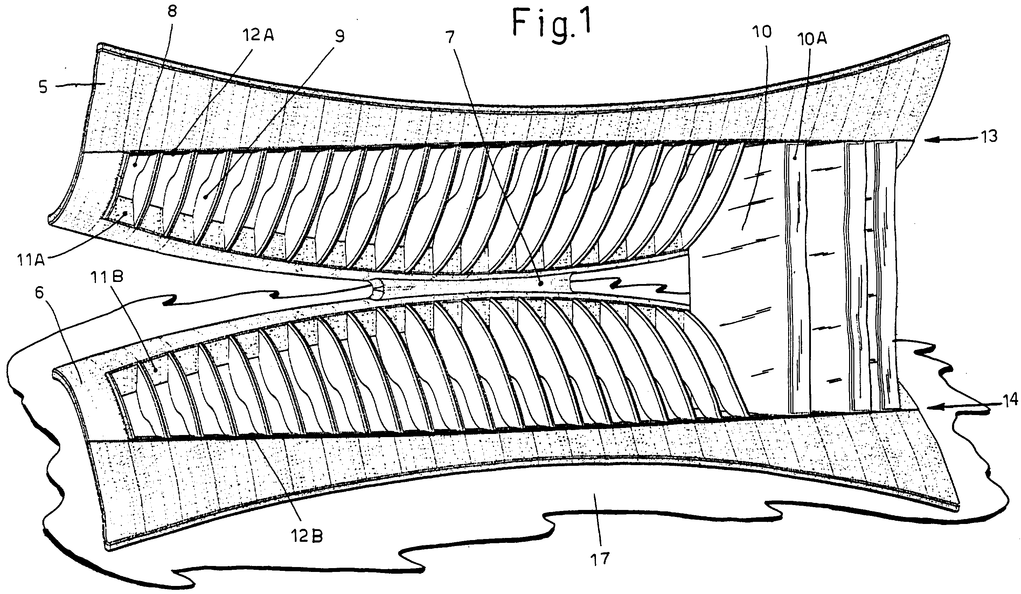

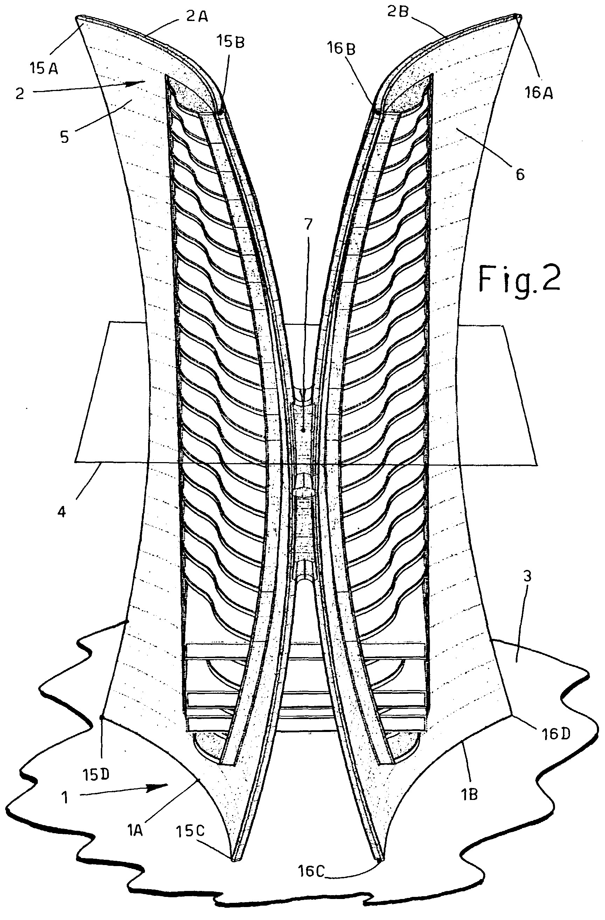

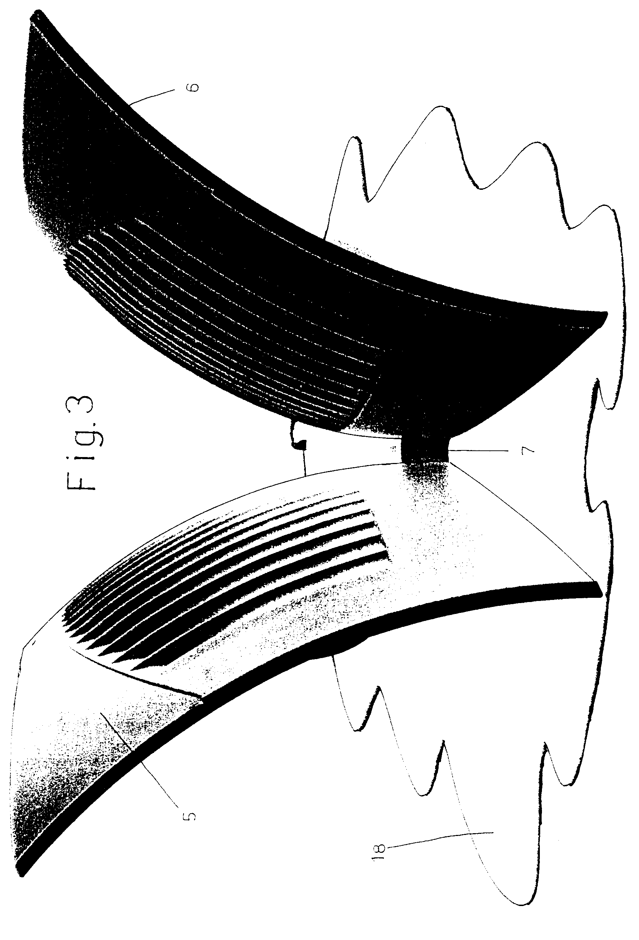

As said container is symmetrical about a central plane 4, it can rest on the surface 3 either via its end 1 or via its end 2. Structurally, the container is formed from two convex rectangular surfaces 5 and 6 joined together, in a substantially V-shaped configuration, by a common base 7. Said V-shaped configuration is particularly visible from Figure 3. The rectangular surfaces 5 and 6 are made convex in order to create edges which always undercut the gripping action of the hands when moving the container. The convex rectangular surfaces 5 and 6 are provided with a plurality of wide slots 8 defined by an analogous plurality of fins 9 arranged in planes parallel to the said planes in which the ends 1 and 2 lie, ie parallel to the resting surface 3 in the representation of Figure 2. The fins 9 are equidistant from each other, the distance separating them being slightly greater than the thickness of the rear surface 10A of a flat rigid object 10. In Figures 1 and 2 the objects 10 represent the typical flat parallelepiped cases housing so-called CDs or compact disks, or laser-read optical disks. The bases of the slots 8 are formed by small surfaces 11A and 11B for the two convex rectangular surfaces 5 and 6 respectively. All the small surfaces 11A and 11B lie in a common base plane. This base plane is that on which the objects 10 rest by abutment when arranged in horizontal storage by hand insertion with the container in the positions shown in Figures 1 and 2. It is also that on which the objects finally rest by gravity when arranged in vertical storage by hand insertion with the container in the position shown in Figure 3. The purpose of this base plane is to constitute a common bearing reference for all the objects, to allow their ordered storage. The slots 8 are bounded on the opposite side to the bases 11A and 11B by surfaces 12A and 12B respectively. The surfaces 12A are substantially perpendicular to the surfaces of the bases 11A in order to delimit the slots 8 present on the convex rectangular surface 5. The surfaces 12B are substantially perpendicular to the surfaces of the bases 11B in order to delimit the slots 8 present on the convex rectangular surface 6. All the surfaces 12A lie in their own common plane 13. All the surfaces 128 lie in their own common plane 14. The plane 13 is parallel to the plane 14, as shown in Figure 1. The distance between the two planes 13 and 14 is the maximum width which the flat rigid objects can have in order to be able to be located in the storage seats represented by the slots 8. The convex rectangular surfaces 5 and 6 have their vertices 15A, 15B, 15B, 15D and 16A, 16B, 16C, 16D lying in their own planes. One of these planes is represented by a horizontal resting surface 17 in the arrangement shown in Figure 1. The vertices 15B, 16B, 16C, 15C lie in a common plane, which is that represented by a horizontal resting surface 18 shown in the container arrangement of Figure 3.

Advantageously, the illustrated embodiments enable all the required technical objects to be attained, specifically to produce a one-piece container by the economical technique of plastic injection-moulding.

## Claims

1. A container for retaining various flat rigid objects (10) characterised by a one-piece structure shaped to offer a plurality of stable storage seats (8) for said flat objects (10) and which can be used with the container arranged in any one of the three possible container resting positions in three perpendicular planes (3, 17, 18), said facility deriving from a shape similar to a V, with arched sides defining said resting facility.

2. A container as claimed in the preceding claim, characterised by stable storage seats for said flat objects consisting of a plurality of parallel slots (8), said slots being defined by a corresponding number of ribs (9).

3. A container as claimed in the preceding claims, characterised by a structure formed by associating two rectangular surfaces (5, 6) joined together in a base region (7) to acquire a substantially V-shape (Figure 3).

4. A container as claimed in the preceding claims, characterised in that the two rectangular surfaces (5, 6) are convex to provide undercut edges facilitating gripping by the fingers when moving the container.

5. A container as claimed in the preceding claims, characterised in that the slots (8) are bounded by base surfaces (11A, 11B) lying in a common plane.

6. A container as claimed in the preceding claims, characterised in that the slots (8) are bounded on their insertion side by surfaces (12A, 12B) lying in parallel planes (13, 14) perpendicular to the plane of the base surfaces (11A, 11B).

7. A container as claimed in the preceding claims, characterised by two ends (1, 2) having edges (1A-1B, 2A-2B) lying in two parallel planes.

8. A container as claimed in the preceding claims, characterised by convex rectangular surfaces (5, 6) having their vertices (15B, 16B, 16C, 15C) lying in a plane perpendicular to the two parallel end planes (1, 2).

9. A container as claimed in the preceding claims, characterised by convex rectangular surfaces, each (5, 6) having their vertices (15A, 15B, 15C, 15D; 16A, 16B, 16C, 16D) lying in their own plane.

10. A container as claimed in the preceding claims, characterised in that the two planes containing the vertices of the rectangular surfaces diverge but without any mutual line of intersection, in order to enable the base vertices of the two convex rectangular surfaces to define a rectangular resting perimeter (Figure 3).
